# EUROPEAN PATENT APPLICATION

(11) **EP 1 519 464 A2**
(43) Date of publication of application: **30.03.2005**
(21) Application number: 04077649.4
(22) Date of filing: 23.09.2004
(51) Int. Cl.: H02G 3/04, H01R 25/16

(54) **Electrical supply and distribution system with ventilation means**

(30) Priority: 25.09.2003 NL 1024381
(71) Applicant: Cleo Holding B.V., 5144 EP Waalwijk (NL)
(72) Inventor: Hinfelaar, Wilhelmus Maria, 5144 EP Waalwijk (NL)
(74) Representative: Riemens, Roelof Harm

(57) **Abstract**

Electrical supply and distribution system, comprising: an energy-distributing distribution rail (1) having at least one branching point (20), and a branching unit (21) which is provided at the location of the branching point (20) and in particular is at least partially encased by a fuse box (22) in which there is at least one connection element (24) for connection to a power supply cable which can be guided into the fuse box (22), the distribution rail (1) being accommodated in a box section (2) made from fire-retardant material.

According to the invention, there are ventilation means (5) for passing a forced gas stream through the box section (2) made from fire-retardant material.

## Description

The invention relates to an electrical supply and distribution system in accordance with the preamble of claim 1.

A system of this type is commercially available, for example under the name Zucchini or BKS Stromschienen A.G. These systems have been developed for the distribution of electric current in low-voltage installations and for this purpose comprise a distribution rail composed of a sandwich structure of electrically conductive bars which are encapsulated in an electrically insulating material. The copper or aluminium conduction bars may in this case be rectangular in cross section with rounded edges. The distribution rail is optionally enclosed in a box section made from fire-retardant material, and at a number of points is provided with branching points for the connection of distribution boxes. Each distribution box comprises a fuse box containing a number of electrical connection elements. Each connection element is electrically conductively connected to an associated conduction bar of the distribution rail. The result is a system which can be secured in buildings, for example to the walls or ceilings, and inter alia forms a good alternative to large numbers of electricity cables which are more vulnerable and susceptible to fires.

One drawback is that if the distribution rail is incorporated in a box section made from fire-retardant material, although protection is achieved against external influences, under certain circumstances it is not possible to ensure that the function of the system is retained inside the box section. For example, during normal operation, with a rated current passed through the distribution rail, internal heating may occur and cannot be sufficiently dissipated by natural cooling, which can give rise to problems. The resistance of the distribution rail will increase as a result of this heating, resulting in an adverse effect on performance and even greater heating, which intensifies the problem. The restoration of natural cooling by, for example, forming holes in the protective box section has the drawback that the fire-retardant effect is largely lost and that this can lead to dirt penetrating into the box section and can also attract insects. If, in such an event, fire occurs in the room in which the system is mounted, this fire will quickly be able to penetrate into the box section via the holes.

It is an object of the present invention to at least partially overcome the abovementioned drawbacks and/or to provide a useable alternative. More particularly, it is an object of the invention to provide an electrical supply and distribution system which operates reliably with substantially constant properties during normal operation and is able to retain its functionality for a sufficiently long time in the event of a fire outside the system.

This object is achieved by an electrical supply and distribution system according to claim 1. The system in this case comprises a distribution rail which distributes electrical energy, is accommodated in a box section made from fire-retardant material and has at least one branching point. A branching unit is provided at the branching point. According to the invention, there are ventilation means which are connected to an interior space which is left clear in the longitudinal direction in the box section, for example the space between the box section inner wall and the distribution rail. The ventilation means are designed to pass a forced gas stream through the box section made from fire-retardant material in which the distribution rail is accommodated. The advantageous result is a system whose functionality is retained under normal operating conditions, yet the system continues to function without damage for a long time even in the event of a local outbreak of fire outside the box section. The internal heating resulting from the electricity passed through the distribution rail can therefore be cooled to a sufficient extent. The gas stream for discharging excess heat may optionally be filtered ambient air, but may also consist of conditioned gases, in particular fire-retardant or fire-extinguishing gases. Consideration may be given to low-oxygen gases which have a fire-extinguishing effect and can therefore make a significant contribution to fire prevention in the event of a fire inside the box section.

The branching unit is in particular at least partially encased by a fuse box. In the fuse box there is at least one connection element for connection to a power supply cable which can be guided into the fuse box.

In one particular embodiment, the system is provided with detection means for monitoring the state in the box section and with a control unit which is connected to the detection means and to the ventilation means. The control unit is in this case designed to adjust the ventilation means as a function of a state detected by the detection means. For example, the capacity of the ventilation means can be increased and/or the speed increased as desired, so that the gas stream is passed through the box section if excessive heating of the distribution rail is detected. It is also possible for the control means to switch off the ventilation means completely if a fire is detected inside the box section.

As detection means, consideration is given, for example, to one or more measurement points with a temperature sensor which is provided inside the box section and in particular is connected to the distribution rail. This makes it possible to continuously provide information about the evolution of heat inside the box section, in particular in the distribution rail during operation.

The detection means can be provided at regular intervals, in particular every 2-5 metres, within the box section. This enables the position where the internal heating becomes excessive and/or fire has broken out to be established with reasonable accuracy so that corresponding measures can be taken. It is also possible to establish the direction in which the fire is moving.

In a variant, the detection means are connected to a signalling system, for example a building management system or a tunnel disaster management system. This can be effected, for example, via modems installed in the system and/or via a communications cable extending through the box section, for example a glass fibre cable. In this way, the electrical supply and distribution system can also have a signalling function. In this case, it is advantageously possible for other means, for example means whose sphere of influence is outside the box section, to be connected to the modem and/or the information cable. Consideration may be given to smoke alarms located outside the box section and/or light meters which can detect a disaster, such as a fire. Consideration may also be given to cameras, public address systems, traffic lights, escape route signalling means, etc.

Further preferred embodiments are given in the subclaims.

The invention will be explained in more detail on the basis of the appended drawings, in which:
- Fig. 1: shows a diagrammatic cross-sectional view of an embodiment of a box section with distribution rail of an electrical supply and distribution system according to the invention;
- Fig. 2: shows a side view of Fig. 1 with the box section omitted;
- Fig. 3: shows a partial view of Fig. 2 on an enlarged scale;
- Fig. 4: shows a plan view of Fig. 3; and
- Fig. 5: shows a perspective view of an electrical supply and distribution system at the location of a branching point, with the cover removed.

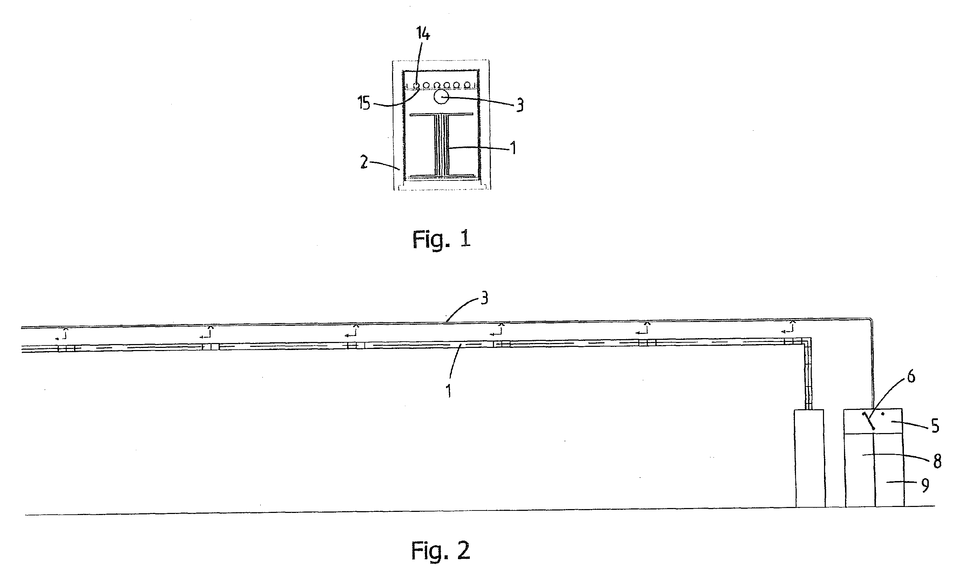

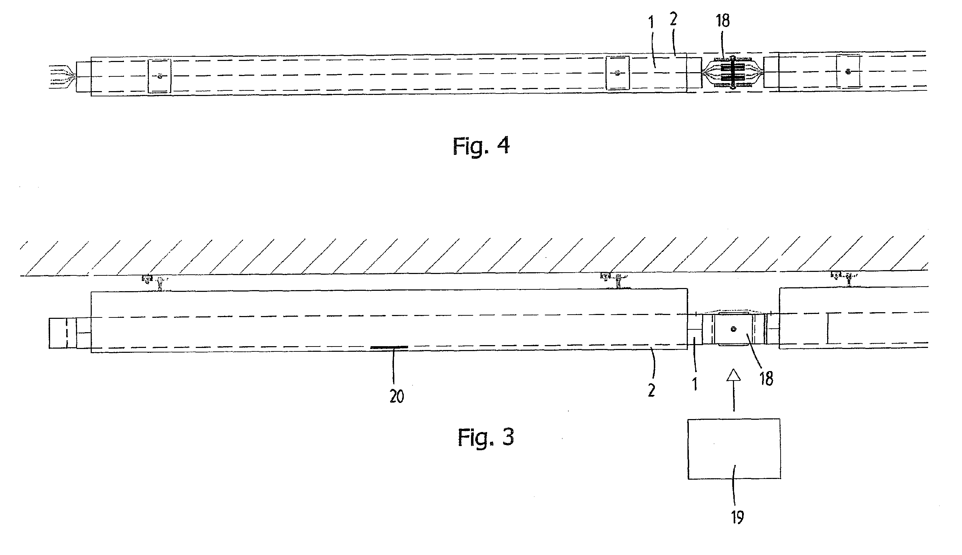

In Figs. 1-5, the distribution rail of the electrical supply and distribution system is denoted by reference numeral 1. The distribution rail 1 is securely housed in a box section 2 made from fire-retardant material and is connected to an electrical power supply. A space is left clear around the distribution rail 1. A cooling line 3 which is provided with outlet openings and is connected to ventilation means 5 extends within this space. The outlet openings may form part of nozzles, for example spray nozzles, placed in the cooling line. Depending on the position of an actuatable valve 6, the ventilation means 5 are connected, via the valve 6, to a filtered ambient air feed 8 or a different type of conditioned gas feed 9. The ventilation means 5 are formed, for example, by a compressor which enables the ambient air or conditioned gases to flow into the space left clear inside the box section 2 under a slightly elevated pressure via the line 3.

The space inside the box section 2 is in this case composed of two compartments, namely a lower compartment in which the distribution rail 1 is located and an upper compartment in which signal cables 14 are located, for example communications cables for data transmission. Between the two compartments there is a partition 15, which in this case is formed by a perforated cable duct or cable ladder.

The distribution rail 1 and the box section 2 are composed of segments having a maximum length of, for example, 3 metres, which are coupled to one another. Connecting blocks 18 are provided at the location of the transitions. A covering cap 19 is fitted over them. In the box section 2 there are detection means (not shown) which are connected to the distribution rail 1 and are in this case formed by a temperature sensor. The detection means are connected via a modem or other electrical connection to a control unit (not shown), which in turn is connected to the ventilation means 5 and to the actuatable valve 6. The detection means may, for example, be accommodated in one or more magnetically shielded compartments.

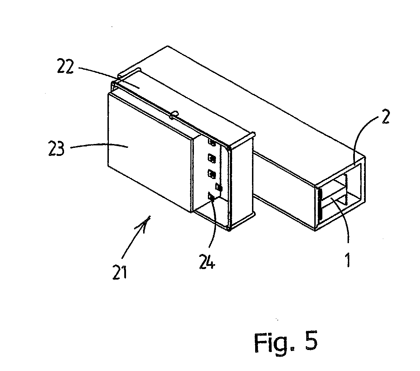

Branching points 20 are provided on the distribution rail 1. At the location of a branching point 20 of this type, there is a cut-out in the box section, which can be covered by a shielding element made from fire-retardant material but on which in particular a branching unit 21 is mounted (Fig. 5). The branching unit 21 comprises a fuse box 22 which is composed of a base part and a cover part (not shown here). A casing 23 made from fire-retardant material, in which there are components protecting against excessive electrical currents and short circuits, is provided inside the fuse box 22. Each protection element is at one end electrically conductively connected to an associated conduction part of the distribution rail 1. At the other end, each protection element is connected to the connection element 24 which is intended for connection to a power supply cable which can be guided into the fuse box 22.

The distribution rail 1 shown here is characterized by a sandwich structure of electrical conduction bars which are separated from one another by insulation material. This assembly of conduction bars which are insulated from one another is reinforced by two C-shaped metal profiled sections, with the result that the overall distribution rail 1 has an I profile, as seen in cross section.

The control unit is used to process signals from the temperature sensors of the detection means and to convert these signals into control signals for the ventilation means 5 and the valve 6. In this way, the temperature profile in the distribution rail 1 can be accurately monitored and, if desired, adjusted by means of passing more or less ambient air along it. In the event of disasters (rapid increases in temperature or fire), it is possible to switch over to the conditioned gas feed 9 by suitable actuation of the valve 6, which then in particular supplies gas with particularly good cooling properties or fire-extinguishing properties. It is also possible for the control unit to switch off the ventilation means 5 in the event of fire, in order to prevent fresh oxygen from being supplied to the fire, or to reverse the direction of the ventilation means 5 in order as far as possible to suck the air out of the box section.

The box section 2 and the branching units 21 connected to it form a closed system which has a high IP rating and is virtually airtight. As a result, it is possible for the gas to be passed through the box section 2 at a slight excess pressure and at a mean air flow rate of a few metres per second. In normal operation, this ensures that the distribution rail 1 is able to maintain its normal temperature and that in the event of disasters or in the event of a fire, an increased air flow and therefore a greater cooling capacity can be applied to the distribution rail 1 and the signal cables 14 by the ventilation means 5.

If the system according to the invention is of great length, it is possible to opt for the supply of gas to be effected at a number of locations in the box section 2. For example, with the cooling line 3 shown, a cascade supply is possible by increasing the size of the outlet openings in the line 3 the further away they are from the ventilation means 5.

In addition to the embodiments shown, many variants are possible. For example, it is also possible for the ventilation means to pass gas directly into the clear space around the distribution rail. It is also possible for the gas to be routed in particular through the compartment in which the cables are located. Furthermore, it is possible to provide, instead of a cooling line, outlet nozzles at fixed intervals which open out in the box section and are each connected to the ventilation means. It is also possible for the detection means to be provided at other locations along the distribution rail and/or box section. Furthermore, the box section and the distribution rail may be of other desired shapes.

The result is an efficient and reliable electrical supply and distribution system with a preservation function. The distribution rail is easy to monitor and keep at the required temperature. The system is relatively inexpensive to produce and can advantageously be used to power lighting, fans, pumps and all other systems which are to be electrically powered in a building, tunnel or other applications for objects which have to comply with what is known as a function retention standard. Full expansion to, for example, a disaster management system in a tunnel or building is readily possible, partly on account of the installed detection means and the communication means for them leading to the control unit.

## Claims

1. Electrical supply and distribution system, comprising:
- an energy-distributing distribution rail (1) having at least one branching point (20);
- a branching unit (21) which is provided at the location of the branching point (20) and in particular is at least partially encased by a fuse box (22) in which there is at least one connection element (24) for connection to a power supply cable which can be guided into the fuse box (22);
the distribution rail (1) being accommodated in a box section (2) made from fire-retardant material,
**characterized in that**
there are ventilation means (5) for passing a forced gas stream through the box section (2) made from fire-retardant material.

2. Electrical supply and distribution system according to claim 1, in which there are detection means for monitoring the state in the box section (2), and in which, furthermore, there is a control unit which is connected to the detection means and the ventilation means (5), which control unit is designed to adjust the ventilation means (5) as a function of a state detected by the detection means.

3. Electrical supply and distribution system according to claim 2, in which the detection means comprise a temperature sensor.

4. Electrical supply and distribution system according to claim 2 or 3, in which the detection means are provided every 2-5 meters in the box section (2).

5. Electrical supply and distribution system according to one of claims 2-4, in which the detection means are connected to a signalling system.

6. Electrical supply and distribution system according to one of the preceding claims, in which there is an actuatable valve (6) for connecting the intake side of the ventilation means (5) to an ambient air feed (8) or a conditioned gas feed (9).

7. Electrical supply and distribution system according to one of the preceding claims, in which the box section (2) is divided into a plurality of compartments as seen in the longitudinal direction.

8. Electrical supply and distribution system according to one of the preceding claims, in which the ventilation means (5) can be connected to the ambient air, in particular by means of a filter.

9. Electrical supply and distribution system according to one of the preceding claims, in which the ventilation means (5) can be connected to a gas reservoir containing conditioned gases, in particular fire-retardant or fire-extinguishing gases.
